# EUROPÄISCHE PATENTSCHRIFT

(11) **EP 3 146 295 B1**
(45) Veröffentlichungstag und Bekanntmachung des Hinweises auf die Patenterteilung: **15.04.2020**
(21) Anmeldenummer: 15727327.7
(22) Anmeldetag: 21.05.2015
(51) Int. Cl.: G01C 21/36

(54) **ANZEIGE VON MANÖVERHINWEISEN FÜR EINE FAHRTROUTE**
DISPLAYING MANEUVERING INSTRUCTIONS ALONG A ROUTE
AFFICHAGE D'INSTRUCTIONS DE MANOEUVRE POUR UN ITINÉRAIRE

(30) Priorität: 22.05.2014 DE 102014209751
(43) Veröffentlichungstag der Anmeldung: 29.03.2017
(73) Patentinhaber: Bayerische Motoren Werke Aktiengesellschaft, 80809 München (DE)
(72) Erfinder: PLATZER, Edna, 80686 München (DE); WAGNER, Vanessa, 80639 München (DE)
(86) Internationale Anmeldenummer: PCT/EP2015/061233
(87) Internationale Veröffentlichungsnummer: WO 2015/177271

(56) Entgegenhaltungen:
- EP-A1- 0 767 448
- EP-A1- 1 942 314
- WO-A1-2007/077829
- DE-A1-102012 213 307
- US-A1- 2001 027 377
- US-A1- 2003 050 756
- US-A1- 2012 268 351

## Beschreibung

Die Erfindung betrifft ein Verfahren zur Anzeige von Manöverhinweisen durch eine Navigationsvorrichtung für eine Fahrtroute, sowie eine entsprechende Navigationsvorrichtung.

Heutzutage sind Navigationsvorrichtungen insbesondere für Kraftfahrzeuge weit verbreitet. Diese bestimmen satellitengestützt über GPS, GLONASS und/oder Galileo ihre Position (und damit auch die Position des Fahrzeugs, das die Navigationsvorrichtung umfasst). Ausgehend von dieser Position können die Navigationsvorrichtungen eine Fahrtroute zu einem vorgegebenen Ziel berechnen und Hinweise auf das nächste auszuführende Manöver ausgeben. Typischerweise umfasst diese Ausgabe ein Piktogramm, beispielsweise einen Pfeil, das das auszuführende Manöver symbolisiert. Häufig wird auch die Entfernung bis zum nächsten auszuführenden Manöver angegeben.

Die Druckschrift US 2013191020 A1 offenbart eine Navigationsvorrichtung, die im Betrieb eine digitale Landkarte anzeigt und in dieser digitalen Landkarte das nächste Fahrmanöver durch einen Pfeil anzeigt, der in der Fahrtroute liegt. Nachteilig hieran ist, dass diese Art der Darstellung in einer perspektivischen Ansicht der Landkarte im Wesentlichen nur für Manöver in geringer Entfernung geeignet ist. In geringer Entfernung können die Pfeile in der Fahrtroute ausreichend unterscheidbar dargestellt werden. Für ein Manöver in größerer Entfernung ist diese Darstellung ungeeignet, da bei einer perspektivischen Ansicht, wie in der Druckschrift gezeigt, die Erkennbarkeit des Pfeiles abnimmt.

Die Druckschriften WO 2007/077829 A1, US 2001/0027377 A1 und US 2012/0268351 A1 offenbaren Navigationsvorrichtungen, die einem Fahrer Navigations- oder Manöverhinweise anzeigen.

Der vorliegenden Erfindung liegt die Aufgabe zugrunde, dem Benutzer einer Routenführung die auszuführenden Manöver und den zugehörigen Manöverort in perspektivischen Landkartenansichten auch für weiter entfernt liegende Manöver erkennbar anzuzeigen. Die Aufgabe wird durch die Gegenstände der unabhängigen Ansprüche gelöst. Vorteilhafte Weiterbildungen sind in den abhängigen Ansprüchen definiert.

Ein Aspekt der Erfindung betrifft ein Verfahren zur Anzeige von Manöverhinweisen durch eine Navigationsvorrichtung für eine Fahrtroute. Das Verfahren umfasst: Anzeigen einer digitalen Landkarte auf einer Anzeige der Navigationsvorrichtung auf perspektivische Art; Abhängig von der Entfernung der Navigationsvorrichtung von dem Manöverort, nämlich dem Ort, an dem gemäß der Fahrtroute ein Fahrmanöver auszuführen ist: Anzeigen eines ersten Manöverhinweises für das Fahrmanöver, wenn sich die Navigationsvorrichtung weiter als eine vorbestimmte Entfernung von dem Manöverort befindet; Anzeigen eines zweiten Manöverhinweises statt des ersten Manöverhinweises für das Fahrmanöver, wenn sich die Navigationsvorrichtung weniger als die vorbestimmte Entfernung von dem Manöverort befindet; wobei der erste und der zweite Manöverhinweis jeweils derart angezeigt werden, dass sie jeweils einen Teil der angezeigten digitalen Landkarte verdecken (insbesondere aber nicht die Fahrtroute verdecken); Anzeigen jeweils einer graphischen Verbindung zwischen dem Manöverort in der digitalen Landkarte und dem ersten beziehungsweise zweiten Manöverhinweis. Die perspektivische Anzeige wird manchmal auch 2.5D Anzeige genannt und beinhaltet häufig, dass ein künstlicher Horizont auf der Anzeige sichtbar ist, und die digitale Landkarte zum Horizont hin verzerrt (gestaucht) wird. Gegenüber einer 2D Anzeige ändert sich damit der Maßstab der Darstellung der Landkarte abhängig vom Ort auf der Anzeige. Gegenüber einer 2D Anzeige ändert sich damit der Maßstab der Darstellung der Landkarte abhängig vom Ort auf der Anzeige. Das Verfahren kann auch mit einer Anzeige der digitalen Landkarte auf zweidimensionale Art (2D) ausgeführt werden und weiter insbesondere auf fahrtweisende Art (also derart ausgerichtet, dass die Repräsentation des Fahrzeugs stets in eine Richtung fährt, insbesondere senkrecht zur Oberkante der Anzeige) oder auf nordweisende Art (also derart, dass die Landkarte stets genordet angezeigt wird). Sowohl der erste als auch der zweite Manöverhinweis beziehen sich auf dasselbe Fahrmanöver.

Hierin wird also vorgeschlagen, den Manöverhinweis von dem Manöverort getrennt, also beabstandet, anzuzeigen. Gleichzeitig wird dem Benutzer jedoch der Bezug des Manöverhinweises zu dem Manöverort in der Landkarte graphisch verdeutlicht.

Diese Anzeigenart birgt gegenüber dem Integrieren des Manöverhinweises in die Fahrtroute wie im Stand der Technik den Vorteil, dass der Manöverhinweis nicht perspektivisch dargestellt werden muss, sondern unverzerrt und in ausreichender Größe angezeigt werden kann. Somit sind selbst Manöverhinweise in größerer Entfernung für den Benutzer bei perspektivischer Ansicht der Landkarte klar erkennbar. Dies ermöglicht dem Benutzer eine rasche Auffassung der Information zu zukünftigen Fahrmanövern, was die Ablenkung vom Straßenverkehr reduziert und zur Verkehrssicherheit beiträgt. Des Weiteren ermöglicht eine von der Fahrtroute separierte Darstellung des Manöverhinweises die Präsentation zusätzlicher Informationen über den Manöverpfeil hinaus, beispielsweise die Entfernung bis zum Manöver.

Zusätzlich wird hierin vorgeschlagen, den Manöverhinweis zu ändern, sobald die Position der Navigationsvorrichtung (also des Fahrzeugs bzw. Benutzers) eine vorgegebene Entfernung zum Manöverpunkt unterschreitet. Die Entfernung kann entlang der Fahrtroute gemessen werden. Auf diese Weise können dem Benutzer die für das Fahrmanöver nötigen Informationen zu den Zeitpunkten gegeben werden, zu denen der Benutzer sie benötigt. Ist der Benutzer beispielsweise noch vergleichsweise weit entfernt von einem Manöverort, so genügt die Angabe, wo sich der Manöverort befindet und welches Manöver auszuführen ist. Sobald sich der Benutzer bis auf eine vorbestimmte Entfernung (beispielsweise 50m, 100m oder 500m) genähert hat, werden ihm diejenigen Informationen präsentiert, die für das auszuführende Fahrmanöver notwendig oder hilfreich sind. Auf diese Weise wird der Fahrer in größerer Entfernung vom Manöverpunkt nicht durch unnötige Informationen vom Verkehrsgeschehen abgelenkt, was die Verkehrssicherheit erhöht.

In einer Implementierung sind der erste und der zweite Manöverhinweis im Wesentlichen rechteckig und die jeweilige graphische Verbindung ist trichterförmig ausgestaltet und grenzt an einen Großteil einer Seite des jeweiligen Manöverhinweises an. Es wird also durch graphische Elemente der Bezug des Manöverhinweises zum Manöverort verdeutlicht. Am einfachsten geschieht dies durch eine Verbindungslinie oder wie hier vorgeschlagen, durch einen Trichter.

Wie oben bereits erläutert kann vorgesehen sein, dass der erste und der zweite Manöverhinweis jeweils einen Pfeil umfassen, der das auszuführende Fahrmanöver darstellt. Ferner kann vom ersten und zweiten Manöverhinweis jeweils auch die Entfernung angegeben werden, die die Navigationsvorrichtung von dem Manöverort entfernt ist. Ebenfalls kann der zweite Manöverhinweis zusätzlich auch die Bezeichnung der Straße angeben, die mithilfe des Manövers erreicht werden soll.

Erfindungsgemäß dient das Verfahren ferner dazu, zusätzlich zu den Manöverhinweisen eine Fahrspurempfehlung auszugeben. Das Verfahren umfasst hierzu: Abhängig von der Entfernung der Navigationsvorrichtung von einem Spurempfehlungsort, nämlich dem Ort, für den eine Fahrspurempfehlung auf der Fahrtroute vorgesehen ist: Anzeigen eines ersten Spurhinweises für die Fahrspurempfehlung, wenn sich die Navigationsvorrichtung in Bewegungsrichtung vor dem Spurempfehlungsort befindet; Anzeigen eines zweiten Spurhinweises für die Fahrspurempfehlung statt des ersten Spurhinweises, wenn sich die Navigationsvorrichtung in Bewegungsrichtung nach dem Spurempfehlungsort befindet (wobei der zweite Spurhinweis die gleiche Information transportiert, wie der erste Spurhinweis); wobei der erste und der zweite Spurhinweis jeweils derart angezeigt werden, dass sie jeweils einen Teil der angezeigten digitalen Landkarte verdecken (insbesondere jedoch nicht die Fahrtroute); Anzeigen einer graphischen Verbindung zwischen dem ersten Spurhinweis in der digitalen Landkarte und dem Spurempfehlungsort; Wobei der zweite Spurhinweis derart angezeigt wird, dass er sich mit der Markierung der aktuellen Position der Navigationsvorrichtung in der digitalen Landkarte fortbewegt; insbesondere wird der zweite Spurhinweis derart angezeigt, dass er angrenzend an die Markierung der aktuellen Position dargestellt wird. Der erste und der zweite Spurhinweis beziehen sich auf dieselbe Fahrspurempfehlung. In einer Erweiterung dieser Weiterbildung umfassen die ersten und zweiten Spurhinweise nicht nur jeweils eine oder mehrere Fahrspurempfehlungen, sondern auch eine oder mehrere aufgrund der Navigationsroute mögliche Fahrspuren. Gegebenenfalls werden diese durch eine leicht abgewandelte graphische Darstellung gegenüber der bzw. den empfohlenen Fahrspuren abgegrenzt.

Somit wird zusätzlich zu Manöverhinweisen eine Fahrspurempfehlung ausgegeben. Dies ist insbesondere dann für den Benutzer hilfreich, wenn unterschiedlichen Fahrspuren unterschiedliche Fahrtrichtungen zugeordnet sind. So kann beispielsweise eine Fahrspur ganz links zwingend ein Abbiegen nach links vom Verkehrsteilnehmer verlangen. Die Fahrspurempfehlung wird entsprechend dem nächsten auszuführenden Fahrmanöver bestimmt (basierend auf Daten zu Fahrspuren in der digitalen Landkarte der Navigationsvorrichtung). Die Fahrspurempfehlung wird auf zwei Arten ausgegeben, abhängig von der Entfernung des Benutzers von dem Fahrspurempfehlungsort (hierin auch Spurempfehlungsort genannt). Der erste und der zweite Fahrspurhinweis (hierin auch Spurhinweis genannt) können dieselbe Gestalt aufweisen und lediglich unterschiedlich angeordnet sein. Der erste Spurhinweis wird ähnlich den Manöverhinweisen neben (also jedenfalls die Fahrtroute nicht verdeckend) dem Spurempfehlungsort angezeigt. Ebenso wie die Manöverhinweise ist der Spurhinweis über ein graphisches Element (Linie, Trichter) mit dem Spurempfehlungsort verbunden und symbolisiert dem Fahrer so eine örtliche Zugehörigkeit und informiert den Fahrer im Voraus über anstehende Spurempfehlungen und notwendige Spurwechsel. Nach dem Passieren des Spurempfehlungsortes bewegt sich der zweite Spurhinweis ebenso wie die Markierung der aktuellen Position in der Karte, der zweite Spurhinweis fährt also mit dem Benutzer mit. Im Gegensatz zu einem Fahrmanöver kann ein Fahrspurwechsel meist über eine gewisse Fahrstrecke ausgeführt werden und muss somit nicht an einem Punkt ausgeführt werden. Das Mitbewegen des Spurhinweises verdeutlicht dem Benutzer, dass die Spurwechsel-Aufgabe fällig ist und ausgeführt werden muss bzw. zumindest überprüft werden muss, ob die aktuelle Fahrspur des Benutzers korrekt ist. Auf diese Weise kann der Benutzer intuitiv erfassen, welche Fahraufgaben auszuführen sind.

In einer besonderen Weiterbildung umfasst das Verfahren: Bestimmen der Fahrspur, in der sich die Navigationsvorrichtung (und das die Navigationsvorrichtung umfassende Fahrzeug) befindet, mithilfe eines Kamerasystems; Wobei der erste und der zweite Spurhinweis jeweils eine Angabe der bestimmten Fahrspur umfassen. Das Kamerasystem ist typischerweise auf die dem Fahrzeug vorausliegende Fahrbahn gerichtet und erkennt Seiten- und Mittelstreifen und gegebenenfalls Richtungspfeile auf den einzelnen Fahrspuren. Mithilfe dieser Information kann auf die Fahrspur rückgeschlossen werden, auf der sich das Fahrzeug befindet. Die Angabe der aktuellen Fahrspur dient dem Benutzer (und Fahrer) als Referenz und zusätzliche Orientierungshilfe.

In einer vorteilhaften Weiterbildung umfasst das Verfahren ferner: Anzeigen einer vorbestimmten Anzahl von gleichmäßig beabstandeten Entfernungsmarkierungen auf einer Darstellung der Fahrtroute ausgehend von dem Manöverort in Richtung der aktuellen Position der Navigationsvorrichtung; wobei jeder Entfernungsmarkierung eine Entfernung von dem Manöverort zugewiesen ist; Anzeigen derselben Anzahl von Statusmarkierungen; wobei jeder Statusmarkierung eine Entfernungsmarkierung auf der Darstellung der Fahrtroute zugewiesen ist; wobei die jeweilige Statusmarkierung ihre Erscheinung ändert, wenn die aktuelle Position der Navigationsvorrichtung die der entsprechenden Entfernungsmarkierung zugewiesene Entfernung vom Manöverort unterschreitet bzw. die Navigationsvorrichtung die jeweilige Entfernung passiert.

Die Entfernungsmarkierungen sind typischerweise graphische Elemente, die auf der Fahrtroute angezeigt werden. Sie sind im jeweils gleichen Abstand angeordnet (beispielweise 50 m, 100 m oder 500 m) und eine (die erste) Entfernungsmarkeirung ist auch vom Manöverort um diesen Abstand versetzt. Jeder Entfernungsmarkierung ist eine Entfernung vom Manöverort zugeordnet. Die Entfernungsmarkierungen sind in Fahrtrichtung (hierin auch Bewegungsrichtung genannt) vor dem Manöverort angeordnet. Gleichzeitig wird dem Benutzer eine graphisch leicht zu erfassende Angabe bereitgestellt, welchen Anteil der Entfernungsmarkierungen er schon passiert hat, und damit in welcher Entfernung er sich vom nächsten Manöverort befindet. Dazu wird dieselbe Anzahl an Statusmarkierungen bereitgestellt, die völlig unabhängig von der Landkarte und dem Manöverort oder den Entfernungsmarkierungen angezeigt werden. Vorteilhafterweise sind diese Statusmarkierungen derart angeordnet, dass die Anzahl der Statusmarkierungen, die ihre Erscheinung geändert haben, im Vergleich zur Gesamtanzahl leicht erfasst werden kann. Typischerweise sind die Statusmarkeirungen in einer Reihe angeordnet. Wenn die Position der Navigationsvorrichtung eine einer Entfernungsmarkierung zugeordnete Entfernung unterschreitet, ändert die entsprechende Statusmarkierung ihre Erscheinung (und behält die geänderte Erscheinung bis zum Beenden der Anzeige der Statusmarkierungen bei). Eine Erscheinungsänderung kann in einer Farbänderung oder dem Ausfüllen einer zuvor nicht ausgefüllten Form der Statusmarkierung bestehen. Auf diese Weise ändert eine Statusmarkierung nach der anderen ihre Erscheinung entsprechend der Annäherung des Benutzers an den Manöverort. Dies gibt dem Benutzer einen intuitiv erkennbaren Hinweis darauf, wann ein Fahrmanöver auszuführen ist und verringert die Wahrscheinlichkeit der Fehlausführung des Manövers.

Ein anderer Aspekt der Erfindung betrifft eine Navigationsvorrichtung mit Anzeige zum Anzeigen von Manöverhinweisen für eine Fahrtroute; wobei die Navigationsvorrichtung dazu eingerichtet ist, das vorstehende Verfahren auszuführen. Ebenso betrifft ein weiterer Aspekt ein Fahrzeug (insbesondere einen PKW) mit einer derartigen Navigationsvorrichtung.

### KURZE BESCHREIBUNG DER ZEICHNUNGEN

Fig. 1 bis 4 zeigen schematisch die Anzeige einer Navigationsvorrichtung beim Annähern an einen Manöverort gemäß einem Ausführungsbeispiel.

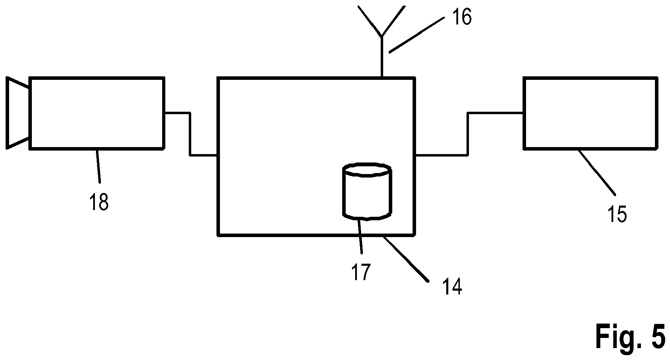

Fig. 5 zeigt schematisch den Aufbau einer Navigationsvorrichtung.

Gleiche Bezugszeichen beziehen sich auf sich entsprechende Elemente über die Figuren hinweg.

### DETAILLIERTE BESCHREIBUNG DER AUSFÜHRUNGSBEISPIELE

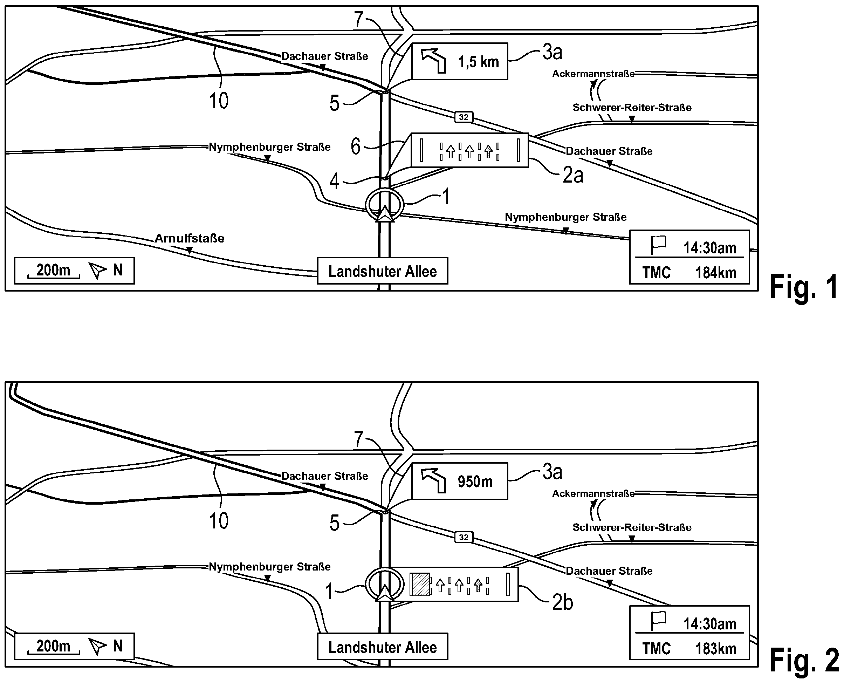

Fig. 1 bis 4 zeigen schematisch die Anzeige einer Navigationsvorrichtung beim Annähern an einen Manöverort gemäß einem Ausführungsbeispiel. Vorliegend führt eine Navigationsvorrichtung ein Fahrzeug auf einer Fahrtroute 10. Die Anzeige der Navigationsvorrichtung zeigt eine digitale Landkarte mit Straßen an, wobei das Fahrzeug auf der Fahrtroute 10 von der Navigationsvorrichtung geführt wird. Für diese Fahrtroute 10 werden Manöverhinweise und Fahrspurempfehlungen ausgegeben. Die Position des Fahrzeugs ist durch eine Positionsmarkierung 1 in der digitalen Landkarte markiert und die Fahrtrichtung wird durch den Pfeil der Positionsmarkierung 1 angegeben.

In Fig. 1 befindet sich das Fahrzeug in Fahrtrichtung vor dem Spurempfehlungsort 4, dem eine Fahrspurempfehlung zugeordnet ist. Die Fahrbahn umfasst am Ort 4 fünf Spuren in eine Fahrtrichtung, die in dem Spurhinweis 2a symbolisch dargestellt sind. Im vorliegenden Beispiel ist der linken Fahrspur ein Abbiegeverhalten nach links zugeordnet, die drei mittleren Fahrspuren führen geradeaus und der rechten Fahrspur ist ein Abbiegeverhalten nach rechts zugeordnet. Im Spurhinweis 2a sind diejenigen Fahrspuren, denen ein empfohlenes oder mögliches Abbiegeverhalten zugeordnet ist, mit entsprechenden Pfeilen dargestellt. Die Empfehlung, welche Fahrspur bzw. Fahrspuren vom Fahrzeug befahren werden sollten, wird durch Hervorheben der empfohlenen Fahrspuren erreicht, hier beispielsweise durch Hervorheben (weiß) der Richtungspfeile der beiden linken Fahrspuren zum Geradeausfahren (Fahrspuren Nr. 2 und Nr. 3 bei Zählung von links). In grau angezeigt (in Fig. 2 gestrichelt) wird dem Fahrer die mögliche (aber nicht empfohlene und im Hinblick auf das nächste Fahrmanöver nicht ideale) rechte Geradeausfahr-Fahrspur (Fahrspur Nr. 4 bei Zählung von links). Weiterhin kann vorgesehen sein (in Fig. 2 nicht gezeigt), auch Pfeile für das Abbiegeverhalten der nicht-möglichen Fahrspuren Nr. 1 und 5 (bei Zählung von links) für den Fahrer allgemein zur Orientierung anzuzeigen (ggf. graphisch weniger hervorgehoben als Fahrspur Nr. 4).

Der Fahrspurhinweis 2a wird die Landkarte überlagernd in der Nähe des Spurempfehlungsortes 4 angezeigt, jedoch nicht derart, dass er die Fahrtroute überlagert. Der Fahrspurhinweis 2a ist durch eine graphische Verbindung, nämlich einen Trichter 6, optisch dem Spurempfehlungsort 4 zugeordnet. Diese Verbindung zeigt dem Fahrer des Fahrzeugs an, für welchen Ort eine Fahrspurempfehlung durch den Spurhinweis 2a gegeben wird.

Weiterhin befindet sich das Fahrzeug in Fahrtrichtung vor dem Manöverort 5, an dem das Fahrzeug ein Abbiegemanöver ausführen soll. Das zukünftige Manöver wird durch einen Manöverhinweis 3 angezeigt, der sowohl das Manöver beschreibt (links abbiegen) als auch die aktuelle Entfernung vom Manöverpunkt (gemessen entlang der Route) angibt. Auch der Manöverhinweis 3 überdeckt die Landkarte aber nicht die Fahrtroute und ist über eine graphische Verbindung (den Trichter 7) mit dem Manöverort 5 verbunden. Dem Fahrer wird somit symbolisiert, dass das Manöver am Ort 5 auszuführen ist.

In Fig. 2 hat das Fahrzeug den Spurempfehlungsort 4 (Fig. 1) passiert und befindet sich jedoch noch vor dem Manöverort 5. Im Moment des Passierens des Spurempfehlungsortes hat sich die erste Spurmarkierung 2a (Fig. 1) zur zweiten Spurmarkierung 2b gewandelt und wurde graphisch an die Positionsmarkierung 1 angeheftet (dargestellt durch die Anpassung des Spurhinweises an die Rundung der Positionsmarkierung 1). Die Spurmarkierung 2b bewegt sich entsprechend der Bewegung der Positionsmarkierung 1 fort und bleibt an dieser angeheftet.

In dem Ausführungsbeispiel der Fig. 1 bis 4 verfügt das Fahrzeug über ein Kamerasystem, mit dessen Hilfe die Fahrspur erkannt wird, auf der sich das Fahrzeug befindet. Die Fahrspur, auf der sich das Fahrzeug befindet, wird in der Spurmarkierung 2b durch eine Schraffierung angezeigt. Andere Darstellungen der Fahrspur, auf der sich das Fahrzeug befindet, sind ebenfalls möglich.

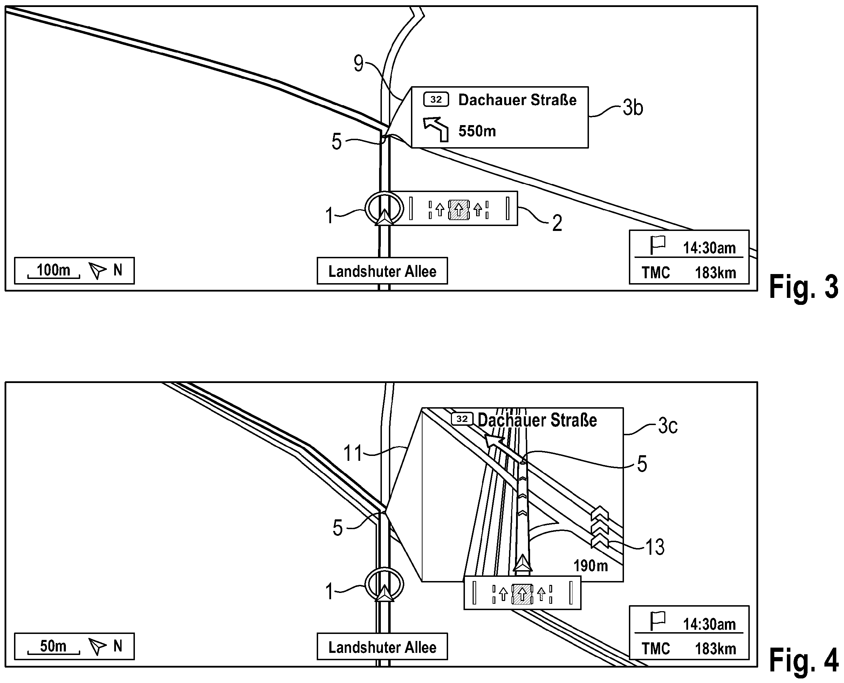

In Fig. 3 wird schematisch eine Ansicht gezeigt, wie sie bei weiterer Annäherung des Fahrzeugs an den Manöverpunkt 5 dargestellt wird. In Fig. 3 befindet sich das Fahrzeug weniger als eine vorbestimmte Entfernung von dem Manöverpunkt 5. Beim Unterschreiten der vorbestimmten Entfernung wird der erste Manöverhinweis 3a (Fig. 1 und 2) in einen zweiten Manöverhinweis 3b gewandelt. Dieser umfasst nun zusätzlich zu den Angaben des ersten Manöverhinweises 3a (Fig. 1 und 2) die Angabe der Straße, zu der das Fahrmanöver das Fahrzeug führen soll. Auch der zweite Manöverhinweis 3b ist über eine graphische Verbindung (Trichter 9) mit dem Manöverort 5 verbunden.

In Fig. 4 wird eine optionale Erweiterung des erfindungsgemäßen Verfahrens verdeutlicht. Bei weiterer Annäherung des Fahrzeugs unter eine zweite vorgegebene Entfernung wird ein dritter Manöverhinweis 3c angezeigt, der Details zur Straßengeometrie bereitstellt, auf der das Fahrmanöver auszuführen ist. Auch dieser dritte Manöverhinweis 3c ist über eine graphische Verbindung 11 mit dem Manöverort 5 verbunden. An dem Hinweis 3c wird am unteren Rand ein dritter Spurhinweis 12 angeheftet, der auf dieselbe Fahrspurempfehlung hinweist, wie der zweite und der erste Spurhinweis.

Ebenfalls im Manöverhinweis 3c umfasst sind Entfernungsmarkierungen 12 und Statusmarkierungen 13. Jeder Entfernungsmarkierung 12 ist eine Entfernung vom Manöverort 5 zugeordnet und eine Statusmarkierung. Sobald die Position des Fahrzeugs eine der zugeordneten Entfernungen unterschreitet wird die entsprechende Statusmarkierung 12 farbig gefüllt. Die Zuordnung von Entfernungsmarkierungen 12 und Statusmarkierungen 13 ist derart, dass die Statusmarkierungen 12 von unten her gefüllt werden. Dies vermittelt dem Fahrer einen guten Eindruck im Sinne eines Count Down, wann das Fahrmanöver auszuführen ist.

Fig. 4 zeigt schematisch eine Navigationsvorrichtung gemäß einem Ausführungsbeispiel. Die Navigationsvorrichtung umfasst eine elektronische Recheneinheit 14, die mithilfe eines Computerprogramms zur Ausführung des erfindungsgemäßen Verfahrens eingerichtet ist. In der elektronischen Recheneinheit 14 ist eine Datenbank 17 umfasst, die das digitale Kartenmaterial speichert. Die Recheneinheit 14 ist mit einer LCD Anzeige 15 verbunden und einem Kamerasystem 18. Generell können auch andere Anzeigentypen wie OLED verwendet werden. Mithilfe einer Antenne 16 empfängt die Recheneinheit 14 Signale von Navigationssatelliten wie GPS oder GLONASS Satelliten und bestimmt damit ihre Position auf der Erde. Typischerweise ist die Navigationsvorrichtung von einem Fahrzeug (nicht dargestellt) umfasst.

## Patentansprüche

1. Verfahren zur Anzeige von Manöverhinweisen (3a, 3b, 3c) durch eine Navigationsvorrichtung für eine Fahrtroute (10), umfassend:
Anzeigen einer digitalen Landkarte auf einer Anzeige (15) der Navigationsvorrichtung auf perspektivische Art;
Abhängig von der Entfernung der Navigationsvorrichtung von dem
Manöverort (5), nämlich dem Ort, an dem gemäß der Fahrtroute ein Fahrmanöver auszuführen ist:
Anzeigen eines ersten Manöverhinweises (3a) für das Fahrmanöver, wenn sich die Navigationsvorrichtung weiter als eine vorbestimmte Entfernung von dem Manöverort befindet;
Anzeigen eines zweiten Manöverhinweises (3b, 3c) statt des ersten Manöverhinweises für das Fahrmanöver, wenn sich die Navigationsvorrichtung weniger als die vorbestimmte Entfernung von dem Manöverort befindet;
wobei der erste und der zweite Manöverhinweis jeweils derart angezeigt werden, dass sie jeweils einen Teil der angezeigten digitalen Landkarte verdecken;
Anzeigen jeweils einer graphischen Verbindung (7) zwischen dem Manöverort in der digitalen Landkarte und dem ersten beziehungsweise zweiten Manöverhinweis;
**dadurch gekennzeichnet, dass**
das Verfahren ferner dazu dient, zusätzlich zu den Manöverhinweisen eine Fahrspurempfehlung (2) auszugeben, und das Verfahren ferner umfasst:
Abhängig von der Entfernung der Navigationsvorrichtung von einem Spurempfehlungsort (4), nämlich dem Ort, für den eine Fahrspurempfehlung auf der Fahrtroute vorgesehen ist:
Anzeigen eines ersten Spurhinweises (2a) für die Fahrspurempfehlung, wenn sich die Navigationsvorrichtung in Bewegungsrichtung vor dem Spurempfehlungsort befindet;
Anzeigen eines zweiten Spurhinweises (2b) statt des ersten Spurhinweises, wenn sich die Navigationsvorrichtung in Bewegungsrichtung nach dem Spurempfehlungsort befindet;
wobei der erste und der zweite Spurhinweis jeweils derart angezeigt werden, dass sie jeweils einen Teil der angezeigten digitalen Landkarte verdecken;
Anzeigen einer graphischen Verbindung (6) zwischen dem ersten Spurhinweis in der digitalen Landkarte und dem Spurempfehlungsort;
wobei der zweite Spurhinweis derart angezeigt wird, dass er sich mit der Markierung (1) der aktuellen Position der Navigationsvorrichtung in der digitalen Landkarte fortbewegt; insbesondere wird der zweite Spurhinweis derart angezeigt, dass er angrenzend an die Markierung der aktuellen Position dargestellt wird.

2. Verfahren nach Anspruch 1, wobei der erste und der zweite Manöverhinweis im Wesentlichen rechteckig sind; und wobei die jeweilige graphische Verbindung trichterförmig ausgestaltet ist und an einen Großteil einer Seite des jeweiligen Manöverhinweises angrenzt.

3. Verfahren nach einem der vorhergehenden Ansprüche, wobei der erste und der zweite Manöverhinweis jeweils einen Pfeil umfasst, der das auszuführende Fahrmanöver darstellt, und jeweils die Entfernung angeben, die die Navigationsvorrichtung von dem Manöverort entfernt ist.

4. Verfahren nach einem der vorhergehenden Ansprüche, wobei der zweite Manöverhinweis zusätzlich auch die Bezeichnung der Straße angibt, die mithilfe des Manövers erreicht werden soll.

5. Verfahren nach Anspruch 1, wobei das Verfahren ferner umfasst:
Bestimmen der Fahrspur, in der sich die Navigationsvorrichtung befindet, mithilfe eines Kamerasystems (18);
wobei der erste und der zweite Spurhinweis jeweils eine Angabe der bestimmten Fahrspur umfassen.

6. Verfahren nach einem der vorhergehenden Ansprüche, ferner umfassend:
Anzeigen einer vorbestimmten Anzahl von gleichmäßig beabstandeten Entfernungsmarkierungen auf einer Darstellung der Fahrtroute ausgehend von dem Manöverort in Richtung der aktuellen Position der Navigationsvorrichtung; wobei jeder Entfernungsmarkierung eine Entfernung von dem Manöverort zugewiesen ist;
Anzeigen derselben Anzahl von Statusmarkierungen; wobei jeder Statusmarkierung eine Entfernungsmarkierung auf der Darstellung der Fahrtroute zugewiesen ist; wobei die jeweilige Statusmarkierung ihre Erscheinung ändert, wenn die aktuelle Position der Navigationsvorrichtung die der entsprechenden Entfernungsmarkierung zugewiesene Entfernung vom Manöverort unterschreitet.

7. Verfahren nach Anspruch 6, wobei die Statusmarkierungen in einer Reihe angezeigt werden; wobei aufeinanderfolgend angezeigten Statusmarkierungen aufeinanderfolgende Entfernungsmarkierungen zugewiesen sind.

8. Navigationsvorrichtung mit Anzeige (15) zum Anzeigen von Manöverhinweisen für eine Fahrtroute; wobei die Navigationsvorrichtung dazu eingerichtet ist, ein Verfahren nach einem der vorhergehenden Ansprüche auszuführen.

9. Fahrzeug, insbesondere Kraftfahrzeug, umfassend eine Navigationsvorrichtung nach Anspruch 8.

## Claims

1. A method for displaying manoeuvring instructions (3a, 3b, 3c) by a navigation device for a route (10), comprising:
displaying a digital map in a perspective manner on a display (15) of the navigation device;
depending on the distance of the navigation device from the location of the manoeuvre (5), specifically the location where a driving manoeuvre is to be carried out as per the route:
displaying a first manoeuvring instruction (3a) for the driving manoeuvre if the navigation device is located farther from the location of the manoeuvre than a predefined distance;
displaying a second manoeuvring instruction (3b, 3c) instead of the first manoeuvring instructions for the driving manoeuvre if the navigation device is located closer to the location of the manoeuvre than the predefined distance;
wherein the first and the second manoeuvring instruction are in each case displayed in such a way as to cover a portion of the displayed digital map;
displaying in each case a graphic link (7) between the location of the manoeuvre on the digital map and the first or second manoeuvring instruction;
**characterised in that**
the method is also used to output, in addition to the manoeuvring instructions, a lane recommendation (2), and the method also comprises:
depending on the distance of the navigation device from the location of a recommended lane (4), specifically the location for which a lane recommendation on the route is provided:
displaying a first lane instruction (2a) for the lane recommendation if the navigation device is located before the location of the lane recommendation in the direction of movement;
displaying a second lane instruction (2b) instead of the first lane instruction if the navigation device is located after the location of the lane recommendation in the direction of movement;
wherein the first and the second lane instruction are in each case displayed in such a way as to cover a portion of the displayed digital map;
displaying a graphic link (6) between the first lane instruction on the digital map and the location of the lane recommendation;
wherein the second lane instruction is displayed in such a way that it moves along with the marking (1) of the current position of the navigation device on the digital map; especially the second lane instruction is displayed in such a way that it is shown adjacently to the marking of the current position.

2. A method according to claim 1, wherein the first and the second manoeuvring instructions are substantially rectangular; and wherein the respective graphic link is funnel-shaped and is adjacent to a large part of one side of the respective manoeuvring instruction.

3. A method according to one of the preceding claims, wherein the first and the second manoeuvring instruction in each case comprises an arrow which displays the driving manoeuvre to be carried out and in each case specify the distance of the navigation device from the location of the manoeuvre.

4. A method according to one of the preceding claims, wherein the second manoeuvring instruction additionally also specifies the name of the road that is to be reached with the aid of the manoeuvre.

5. A method according to claim 1, wherein the method also comprises:
determining the lane in which the navigation device is situated, with the aid of a camera system (18); wherein the first and the second lane instruction in each case comprises an indication of the determined lane.

6. A method according to one of the preceding claims, further comprising:
displaying a predetermined number of equally spaced-apart distance markings on a display of the route starting from the location of the manoeuvre in the direction of the current position of the navigation device; wherein each distance marking is assigned a distance from the location of the manoeuvre;
displaying the same number of status markings;
wherein each status marking is assigned a distance marking on the display of the route; wherein the respective status marking changes its appearance if the current position of the navigation device is closer to the location of the manoeuvre than the distance assigned to the corresponding distance marking.

7. A method according to claim 6, wherein the status markings are displayed in a row; wherein successively displayed status markings are assigned successive distance markings.

8. A navigation device with display (15) for displaying manoeuvring instructions for a route; wherein the navigation device is configured to carry out a method according to one of the preceding claims.

9. A vehicle, in particular a motor vehicle, comprising a navigation device according to claim 8.

## Revendications

1. Procédé d'affichage d'indicateurs de manœuvre (3a, 3b, 3c) par un système de navigation concernant un trajet (10) comprenant des étapes consistant à :
afficher en perspective une carte géographique numérique sur un affichage (15) du dispositif de navigation,
en fonction de la distance du système de navigation du lieu de manœuvre (5), à savoir le lieu au niveau duquel conformément au trajet une manœuvre de conduite doit être effectuée :
- afficher une première indication (3a) pour la manœuvre de conduite lorsque le dispositif de navigation est situé à une distance du lieu de manœuvre supérieure à une distance prédéfinie,
- afficher une seconde indication (3b, 3c) à la place de la première indication pour la manœuvre de conduite lorsque le dispositif de navigation est situé à une distance du lieu de manœuvre inférieure à la distance prédéfinie,
la première indication de manœuvre et la seconde indication de manœuvre étant respectivement affichées de sorte qu'elles couvrent respectivement une partie de la carte géographique numérique affichée,
- afficher respectivement une liaison graphique (7) entre le lieu de manœuvre dans la carte géographique numérique et la première ou la seconde indication de manœuvre,
**caractérisé en ce que**
le procédé a en outre pour fonction, de délivrer en plus des indications de manœuvre une recommandation de voie de circulation (2) et le procédé comprend en outre des étapes consistant à :
en fonction de la distance du dispositif de navigation à un lieu de recommandation de voie de circulation (4), à savoir du lieu pour lequel la recommandation de voie de déplacement est prévue sur le trajet,
- afficher une première indication (2a) pour la recommandation de voie de circulation, lorsque le dispositif de navigation est situé dans la direction de déplacement à l'avant du lieu de recommandation de voie de circulation,
- afficher une seconde indication (2b) à la place de la première indication lorsque le dispositif de navigation est situé dans la direction de déplacement à l'arrière du lieu de recommandation de voie de circulation,
la première indication de voie de circulation et la seconde indication de voie de circulation de sorte qu'elles recouvrent respectivement une partie de la carte géographique numérique affichée,
- afficher une liaison graphique (6) entre la première indication de voie de circulation et le lieu de recommandation de voie de circulation sur la carte géographique numérique,
la seconde indication de voie de circulation étant affichée de sorte qu'elle se déplace avec le repère (1) de la position actuelle du dispositif de navigation dans la carte géographique numérique en particulier la seconde indication de voie de circulation étant affichée de sorte qu'elle soit représentée au voisinage du repère de la position actuelle.

2. Procédé conforme à la revendication 1,
selon lequel la première indication de manoeuvre et la seconde indication de manœuvre sont essentiellement rectangulaires, et la liaison graphique respective est en forme d'entonnoir et est située en bordure d'une grande partie, d'un côté de l'indication de manœuvre respective.

3. Procédé conforme à l'une des revendications précédentes,
selon lequel la première indication de manœuvre et la seconde indication de manœuvre comportent respectivement une flèche qui représente la manœuvre à effectuer, et indiquant respectivement la distance qui sépare le dispositif de navigation du lieu de manœuvre.

4. Procédé conforme à l'une des revendications précédentes,
selon lequel la seconde indication de manœuvre indique en outre également la désignation de la chaussée qui doit être atteinte à l'aide de la manœuvre.

5. Procédé conforme à la revendication 1,
comportant en outre une étape consistant à déterminer la voie de circulation sur laquelle est situé le dispositif de navigation au moyen d'un système de caméra (18), la première indication de voie de circulation et la seconde indication de voie de circulation délivrant respectivement la voie de circulation déterminée.

6. Procédé conforme à l'une des revendications précédentes, comprenant en outre des étapes consistant à :
afficher un nombre prédéfini de repères de distance régulièrement espacés sur une représentation du trajet à partir du lieu de manœuvre en direction de la position actuelle du dispositif de navigation,
chaque repère de distance étant associé à la distance du lieu de manœuvres,
afficher le même nombre de repères d'état, chaque repère d'état étant associé à un repère de distance sur la représentation du trajet, l'apparence de chaque repère d'état étant modifiée lorsque la position actuelle du dispositif de navigation passe en-dessous de la distance du lieu de manœuvre associée au repère de distance correspondant.

7. Procédé conforme à la revendication 6,
selon lequel les repères d'état sont affichés selon une rangée, et des repères d'état affichés successivement sont associés des repères de distance successifs.

8. Dispositif de navigation comportant un affichage (15) permettant d'afficher des indications de manœuvre pour un trajet, le dispositif de navigation étant réalisé pour permettre la mise en œuvre d'un procédé conforme à l'une des revendications précédentes.

9. Véhicule, en particulier véhicule automobile, comprenant un système de navigation conforme à la revendication 8.
